(19) Europäisches Patentamt / European Patent Office / Office européen des brevets

(11) **EP 4 155 345 A1**

(12) **EUROPÄISCHE PATENTANMELDUNG**

(43) Veröffentlichungstag:
29.03.2023  Patentblatt 2023/13

(21) Anmeldenummer: 21194745.2

(22) Anmeldetag: 03.09.2021

(51) Internationale Patentklassifikation (IPC):
**C08L 7/02** (2006.01)

(52) Gemeinsame Patentklassifikation (CPC):
(C-Sets verfügbar)
**B60C 1/0041; B32B 5/024; B32B 25/10; B60C 1/00; B60C 9/0042; B60C 9/02; C08L 7/02; C08L 33/04; D06M 13/395; D06M 15/263; D06M 15/55; D06M 15/693;** B60C 2200/12; D06M 2200/50  (Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Continental Reifen Deutschland GmbH 30165 Hannover (DE)**

(72) Erfinder:
• **Schmaunz-Hirsch, Cornelia 30165 Hannover (DE)**
• **Naumann, Wolfgang 30165 Hannover (DE)**
• **Jahr, Michael 30165 Hannover (DE)**
• **Kramer, Thomas 30165 Hannover (DE)**
• **Kahner, Rainer 30165 Hannover (DE)**

(74) Vertreter: **Continental Corporation c/o Continental AG Intellectual Property Postfach 169 30001 Hannover (DE)**

(54) **VERBUNDMATERIAL FÜR FAHRZEUGREIFEN UND VERFAHREN ZUR HERSTELLUNG**

(57)    Die Erfindung betrifft ein Verfahren zur Herstellung eines vulkanisierbaren Verbundmaterials, umfassend die Schritte: a) Herstellen oder Bereitstellen eines textilen Festigkeitsträgers, b) Behandeln des textilen Festigkeitsträgers mit einer wässrigen Dispersion zur Haftaktivierung des textilen Festigkeitsträgers und zum Erhalt eines haftaktivierten textilen Festigkeitsträgers, und c) Einbringen des haftaktivierten textilen Festigkeitsträgers in eine vernetzbare Gummierungsmischung zum Erhalt des vulkanisierbaren Verbundmaterials, wobei die wässrige Dispersion im Wesentlichen frei ist von freiem Resorcin sowie Resorcin-Vorkondensaten, insbesondere Resorcin-Formaldehyd-Vorkondensaten, und frei ist von freiem Formaldehyd sowie Formaldehyd freisetzenden Substanzen, wobei die vernetzbare Gummierungsmischung durch Vulkanisation zu einer vernetzten Gummierungsmischung verarbeitet werden kann, die zumindest abschnittsweise für sichtbares Licht zumindest teilweise durchlässig ist.

(52) Gemeinsame Patentklassifikation (CPC): (Forts.)

C-Sets
**C08L 7/02, C08L 19/02, C08L 33/04, C08L 63/00,
C08L 91/00, C08K 3/36**

**Beschreibung**

Die Erfindung betrifft ein Verfahren zur Herstellung eines vulkanisierbaren Verbundmaterials und ein darauf aufbauendes Verfahren zur Herstellung eines vulkanisierten Verbundmaterials bzw. eines elastomeren Erzeugnisses, sowie ein entsprechendes vulkanisierbares Verbundmaterial und ein daraus herstellbares vulkanisiertes Verbundmaterial bzw. ein entsprechendes elastomeres Erzeugnis. Die Erfindung betrifft zudem eine Verwendung für eine spezifische wässrige Dispersion zur Haftaktivierung von textilen Festigkeitsträgern für Verbundmaterialien mit transparenten Gummierungsmischungen.

Der Gegenstand der Erfindung ist in den beigefügten Ansprüchen definiert.

Es ist bekannt, dass Fahrzeugreifen, wie beispielsweise Fahrradreifen, in verschiedenen Bauteilen textile Festigkeitsträger zur Verstärkung aufweisen. Auch andere technische Gummiartikel, wie Gurte, Riemen und Schläuche weisen in vielen Fällen Festigkeitsträger auf. Hierbei sind die Festigkeitsträger üblicherweise von mindestens einer Kautschukmischung umgeben, die auch als Gummierungsmischung bzw. im vulkanisierten Zustand als Gummierung bezeichnet wird.

Eine Problematik besteht regelmäßig darin, dass die Festigkeitsträger und die umgebende Gummierung im Regelfall unterschiedliche mechanische Eigenschaften, insbesondere unterschiedliche Festigkeiten, aufweisen. Vor allem bei andauernder mechanischer und dynamischer Beanspruchung, wie sie im Fahrbetrieb des Fahrzeugreifens auftritt, ist daher eine ausreichende Haftung zwischen den Festigkeitsträgern und der umgebenden Gummierung notwendig, um trotzdem eine hinreichende Verbundfestigkeit gewährleisten zu können.

Im Stand der Technik ist bekannt, die Festigkeitsträger vor der Gummierung für eine ausreichende Haftung zu aktivieren (sogenannte Haftungsaktivierung oder Haftaktivierung), wobei üblicherweise sogenannte RFL-Dips (kurz für Resorcin-Formaldehyd-Latex) verwendet werden, welche beispielsweise mittels eines Tauchbades appliziert werden können.

Sofern die anwendungsspezifischen Anforderungen an die physikalischchemischen Eigenschaften der Gummierung dies zulassen, beispielsweise weil die erwarteten Anforderungen an ein Bauteil so sind, so dass bspw. auf den Einsatz von Ruß in der Gummierungsmischung verzichtet werden kann, lässt sich diese Gummierung prinzipiell lichtdurchlässig, insbesondere transparent, ausgestallten.

Neben den Vorteilen für die designtechnische Gestaltung von solchen elastomeren Erzeugnissen, insbesondere der erhöhten Flexibilität der Produktdesigner bei der Konzeption von farblich ansprechenden Designs mit interessanten Tiefeneffekten, rücken seit einiger Zeit vermehrt auch die technischen Vorteile in den Fokus, die eine entsprechende transparente Ausgestaltung für die Überwachung des Herstellungsverfahrens und die Qualitätskontrolle der jeweiligen Produkte ermöglicht.

Während es beispielsweise bei Fahrradreifen von vielen Kunden als optisch ansprechend empfunden wird, die textilen Festigkeitsträger im Fahrradreifen durch eine transparente Gummierung hindurch erkennen zu können, steht für den Fachmann vor allem im Vordergrund, dass er die textilen Festigkeitsträger in dieser Ausgestaltung einer visuellen Sichtkontrolle unterziehen kann.

Bei den aus dem Stand der Technik bekannten Systemen, die auf (ggf. eingefärbte) RFL-Dips als Haftvermittler zurückgreifen, sind die diesbezüglichen Möglichkeiten jedoch in vielen Fällen reduziert. Dies liegt insbesondere an der regelmäßig starken, rot-bräunlichen Eigenfärbung, die die aus dem Stand der Technik bekannten RFL-Haftvermittler aufweisen und die in vielen Fällen als nachteilig empfunden wird.

Abgesehen von der häufig als optisch wenig ansprechend angesehenen rot-bräunlichen Eigenfärbung, die auch die mittels Farbzusätzen einstellbaren Färbungen in vielen Fällen limitiert, überdeckt diese Haftaktivierung regelmäßig die Färbung der textilen Festigkeitsträger, obwohl diese für den Fachmann sehr aufschlussreich sein könnte, insbesondere zur Identifikation der eingesetzten Materialien anhand deren Färbung oder zum Erkennen etwaiger herstellerspezifischer Markierungen wie beispielsweise Kennfäden. Zudem wird der zwischen RFL-aktivierten textilen Festigkeitsträgern und transparenten Gummierungsmischungen erzeugte Grenzflächenbereich in vielen Fällen als nachteilig empfunden, da dieser eine scharfe Identifikation einzelner Festigkeitsträger in vielen Fällen erschwert, insbesondere, wenn sich diese wegen der rot-bräunlichen Färbung ohnehin nur schlecht von einem unterliegenden, dunklen Gummiwerkstoff abheben.

Es war die primäre Aufgabe der vorliegenden Erfindung, die vorstehend beschriebenen Nachteile des Standes der Technik auszuräumen oder zumindest zu verringern.

Es war somit eine Aufgabe der vorliegenden Erfindung, ein Verfahren zur Herstellung von vulkanisierbaren Verbundmaterialien anzugeben, aus denen mittels Vulkanisation leistungsfähige vulkanisierte Verbundmaterialien mit ausgezeichneten optischen Eigenschaften erhalten werden können, die in Fahrzeugreifen und anderen elastomeren Erzeugnissen eingesetzt werden können.

Es war dabei eine Aufgabe der vorliegenden Erfindung, dass die vulkanisierten Verbundmaterialien eine möglichst leichte, zuverlässige und vor allem zerstörungsfreie Identifikation und Qualitätsprüfung der in den vulkanisierten Verbundmaterialien enthaltenen textilen Festigkeitsträger ermöglichen sollten, wobei insbesondere auch eine klare Unterscheidbarkeit von benachbarten textilen Festigkeitsträgern möglich sein sollte, so dass beispielsweise sogar eine Bewertung der Spleißqualität ermöglicht wird.

Es war eine ergänzende Aufgabe der vorliegenden Erfindung, dass die vulkanisierten Verbundmaterialien eine gegenüber dem Stand der Technik erhöhte Flexibilität hinsichtlich der Farbgestaltung aufweisen sollten. Hierbei war es insbesondere wünschenswert, dass die Grundfarbe der textilen Festigkeitsträger trotz etwaiger haftaktivierender Beschichtungen von außen sichtbar bleiben sollte, insbesondere um eine farbliche Materialidentifikation zu ermöglichen und herstellerbedingte Kennfäden von außen sichtbar zu machen.

Es war eine zusätzliche Aufgabe der vorliegenden Erfindung, dass die vulkanisierten Verbundmaterialien eine ausreichend hohe Verbundfestigkeit zwischen den textilen Festigkeitsträgern und der Gummierung zeigen sollten, wobei es im Lichte der vorstehenden Aufgaben wünschenswert war, dass die haftvermittelnde Beschichtung der textilen Festigkeitsträger eine hohe chemische Kompatibilität mit der Gummierung aufweist, so dass an der Grenzfläche eine möglichst geringe Lichtstreuung erfolgt.

Es war eine weitere Aufgabe der vorliegenden Erfindung, dass die positiven Farbeigenschaften, anders als beispielsweise bei RFL-Dips, weitgehend unabhängig von den bei der Vulkanisation verwendeten Bedingungen reproduzierbar sein sollten.

Für den Fachmann ist ersichtlich, dass es eine ergänzende Aufgabe der vorliegenden Erfindung war, zudem ein Verfahren zur Herstellung eines elastomeren Produkts, insbesondere eines Fahrzeugreifens, und ein entsprechendes elastomeres Produkt, insbesondere einen Fahrzeugreifen anzugeben. Es war eine ergänzende Aufgabe der vorliegenden Erfindung, dass die entsprechenden Fahrzeugreifen einen Beitrag zur Fahrsicherheit leisten sollten.

Zudem war es eine ergänzende Aufgabe der vorliegenden Erfindung, eine spezifische Verwendung einer wässrigen Dispersion zur Haftaktivierung von textilen Festigkeitsträgern für Verbundmaterialien mit transparenten Gummierungsmischungen zur Verbesserung der visuellen Identifizierbarkeit der textilen Festigkeitsträger in der transparenten Gummierungsmischung bzw. zur Verringerung von optischen Defekten im Kontaktbereich zwischen den textilen Festigkeitsträgern und der transparenten Gummierungsmischung anzugeben.

Die vorstehend genannten Aufgaben werden durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter vulkanisierbarer Verbundmaterialien, vulkanisierter Verbundmaterialien, elastomerer Erzeugnisse und Verwendungen ergeben sich aus den Merkmalen bevorzugter Verfahren.

Die Erfindung betrifft ein Verfahren zur Herstellung eines vulkanisierbaren Verbundmaterials, umfassend die Schritte:

a) Herstellen oder Bereitstellen eines textilen Festigkeitsträgers,

b) Behandeln des textilen Festigkeitsträgers mit einer wässrigen Dispersion zur Haftaktivierung des textilen Festigkeitsträgers und zum Erhalt eines haftaktivierten textilen Festigkeitsträgers, und

c) Einbringen des haftaktivierten textilen Festigkeitsträgers in eine vernetzbare Gummierungsmischung zum Erhalt des vulkanisierbaren Verbundmaterials,

wobei die wässrige Dispersion im Wesentlichen frei ist von freiem Resorcin sowie Resorcin-Vorkondensaten, insbesondere Resorcin-Formaldehyd-Vorkondensaten, und frei ist von freiem Formaldehyd sowie Formaldehyd freisetzenden Substanzen,

wobei die vernetzbare Gummierungsmischung durch Vulkanisation zu einer vernetzten Gummierungsmischung verarbeitet werden kann, die zumindest abschnittsweise für sichtbares Licht zumindest teilweise durchlässig ist.

Mit dem erfindungsgemäßen Verfahren werden in vorteilhafter Weise vulkanisierbare Verbundmaterialien erhalten, aus denen mittels Vulkanisation leistungsfähige vulkanisierte Verbundmaterialien mit einer exzellenten Verbundfestigkeit und ausgezeichneten optischen Eigenschaften für den Einsatz in Fahrzeugreifen und anderen elastomeren Erzeugnissen erhalten werden können.

In den mit dem erfindungsgemäßen Verfahren erhaltenen vulkanisierten Verbundmaterialien ist es durch die spezifisch gewählte Haftaktivierung und die dadurch erreichbaren optimierten Grenzflächeneigenschaften vorteilhafterweise möglich, auch vergleichsweise tiefliegende textile Festigkeitsträger im vulkanisierten Verbundmaterial von außen deutlich zu identifizieren, so dass eine zuverlässige und zerstörungsfreie Qualitätsprüfung möglich ist, bspw. auch für den Kunden beim Reifenkauf.

Auch bei der Fertigung der elastomeren Erzeugnisse ist eine Qualitätskontrolle auf diese Weise einfacher möglich, insbesondere da die Identifizierbarkeit einzelner Festigkeitsträger derart hoch ist, dass beispielsweise auch festgestellt werden kann, wenn beim Spleißen des Verbundmaterials eine unerwünscht hohe oder unerwünscht niedrige lokale Dichte an Festigkeitsträgern, insbesondere im Spleißbereich, erzeugt wird.

In synergistischer Weise wird durch die gewählte Haftaktivierung überraschenderweise keine ungewollte Färbung verursacht, da diese vorteilhafterweise farblos bzw. transparent ausgebildet werden kann. Hierdurch ist es möglich, die ursprüngliche Färbung der textilen Festigkeitsträger zu erkennen, wodurch vorteilhafterweise Informationen über die in den textilen Festigkeitsträgern verwendeten Materialien und/oder Herstellerangaben, die bspw. durch Kennfäden codiert sind, sichtbar bleiben.

Mit dem erfindungsgemäßen Verfahren ist es zudem möglich, die Flexibilität hinsichtlich der Farbgestaltung signifikant zu erhöhen, da vorteilhafterweise nicht nur die Gummierung (transparent farbig) eingefärbt werden kann, sondern eine Färbung der textilen Festigkeitsträger ebenso möglich wird, wie eine Färbung der haftaktivierenden Beschichtung. Es kann dabei als Vorteil der Erfindung gesehen werden, dass die positiven Farbeigenschaften, weitgehend unabhängig von den bei der Vulkanisation verwendeten Temperaturen erhalten werden.

Abschließend kann es als Vorteil des erfindungsgemäßen Verfahrens gesehen werden, dass sich in den vulkanisierten Verbundmaterialien, bedingt durch die Art der Haftaktivierung, für die textilen Festigkeitsträger ein leichter Glanz ergibt, der je nach der gewählten Einfärbung in Richtung eines metallischen Glanzes gehen kann. Durch den Einsatz eines entsprechenden Verbundmaterials an Stelle eines herkömmlichen, weitgehend absorbierenden Gummiwerkstoffs wird durch diesen Glanz die Sichtbarkeit des Reifens gerade bei schwierigen Sichtbedingungen erhöht, da beispielsweise ein höherer Anteil an einfallendem Scheinwerferlicht reflektiert werden kann.

Die Definition der vernetzbaren Gummierungsmischung über die Eigenschaften der durch Vulkanisation daraus herstellbaren Gummierung, d.h. der vernetzten Gummierungsmischung ist in Übereinstimmung mit dem in der Branche üblichen Vorgehen und dem fachmännischen Verständnis, da eine entsprechende Definition bei entsprechenden polymeren Materialien, deren Struktur nicht genau beschrieben werden kann, regelmäßig die einzige praktikable Möglichkeit darstellt, das entsprechende Material zu definieren. Ein aus dem vulkanisierbaren Verbundmaterial herstellbares vulkanisiertes Verbundmaterial umfasst entsprechend eine vernetze Gummierungsmischung, die zumindest abschnittsweise für sichtbares Licht zumindest teilweise durchlässig ist.

Im Rahmen der vorliegenden Erfindung bedeutet der Ausdruck "für sichtbares Licht zumindest teilweise durchlässig", in Übereinstimmung mit dem fachmännischen Verständnis, dass die vernetzte Gummierungsmischung so wenig Wechselwirkung mit elektromagnetischer Strahlung einer Wellenlänge im sichtbaren Bereich, bzw. einem Teil der Wellenlängen im sichtbaren Bereich, zeigt, dass die textilen Festigkeitsträger im vulkanisierbaren Verbundmaterial und im vulkanisierten Verbundmaterial von außen sichtbar sind. Dies bedeutet, dass es nicht nötig ist, dass die vernetzte Gummierungsmischung überhaupt keine Absorption im sichtbaren Wellenlängenbereich zeigt, da insbesondere bei transparent farbigen Gummierungen, auch eine teilweise Absorption, bspw. bei bestimmten Wellenlängen, toleriert werden kann.

Gemäß der vorstehenden Definition ist die vernetzte Gummierungsmischung zumindest abschnittsweise für sichtbares Licht zumindest teilweise durchlässig. Dies bedeutet, dass das vulkanisierbare Verbundmaterial bzw. das vulkanisierte Verbundmaterial auch Abschnitte umfassen kann, in denen die Gummierung nicht lichtdurchlässig ausgebildet ist, beispielsweise in der Form von alternierenden Bereichen oder einer undurchsichtigen Grundlage unter den textilen Festigkeitsträgern, die von einer lichtdurchlässigen Decklage bedeckt sind.

Der Begriff "im Wesentlichen frei von" ist in Übereinstimmung mit dem fachmännischen Verständnis im Rahmen der vorliegenden Erfindung so zu verstehen, dass die entsprechenden Substanzen nur in Mengen enthalten sein dürfen, die die wesentlichen Eigenschaften der beanspruchten Zusammensetzung nicht wesentlich beeinflussen. Beispielsweise darf die Menge dieser Stoffe nicht über Spurenmengen hinausgehen, die aus einer Kontamination resultieren. Typischerweise sollen in der erfindungsgemäß einzusetzenden wässrigen Dispersion jeweils nicht mehr als 0,1 Gew.-% (Trockengewicht), bezogen auf das Gesamtgewicht der wässrigen Dispersion, von den angegebenen Komponenten, wie etwa Resorcin, Resorcin-Vorkondensaten, Formaldehyd und Formaldehyd freisetzenden Substanzen enthalten sein, d.h. 0,1 % nach Gewicht ist die maximale Menge für jede der obigen Komponenten. Vorzugsweise beträgt der Gehalt sämtlicher dieser Komponenten in der wässrigen Dispersion 0 Gew.-%.

Die im Rahmen der vorliegenden Erfindung verwendete Angabe phr (parts per hundred parts of rubber by weight) ist die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen, die sich entsprechend zu 100 addiert.

Das erfindungsgemäße Verfahren ist vorteilhafter Weise für alle dem Fachmann bekannten textilen Festigkeitsträger geeignet. Jedoch konnten die Erfinder der vorliegenden Erfindung Merkmale des textilen Festigkeitsträger identifizieren, die für das erfindungsgemäße Verfahren besonders geeignet sind.

Bevorzugt ist nämlich ein erfindungsgemäßes Verfahren, wobei der textile Festigkeitsträger zumindest teilweise eingefärbt ist und/oder zumindest einen Kennfaden umfasst, bevorzugt zumindest einen Kennfaden umfasst. In dieser Ausgestaltung kommen die Vorteile des erfindungsgemäßen Verfahrens besonders ausgeprägt zur Geltung. In dem erfindungsgemäßen Verfahren können auf einer oder auf mehreren Oberflächen des vulkanisierbaren Verbundmaterials zudem auch Luftabführungsfäden angebracht werden, die, da sie unter der lichtdurchlässigen vernetzten Gummierungsmischung sichtbar bleiben, vorteilhafterweise auch farbig gestaltet werden können. Insbesondere bei der späteren Anordnung der vulkanisierten Verbundmaterialien an der Außenseite von Fahrzeugreifen ist es aber bevorzugt, zumindest auf der außenliegenden Oberfläche keine entsprechenden Luftabführungsfäden vorzusehen.

Bevorzugt ist zudem ein erfindungsgemäßes Verfahren, wobei der textile Festigkeitsträger ein Material umfasst, welches ausgewählt ist aus der Gruppe bestehend aus Polyestern, Polyamiden, Polyurethanen, Glas, Kohlenstoff, Cellulosen, Polycarbonaten, Polyketonen und Kombinationen dieser Materialien, bevorzugt ausgewählt ist aus der Gruppe bestehend aus Polyestern, regenerierter Cellulose, insbesondere Rayon, Aramiden, Nylon und Kombinationen dieser Materialien, besonders bevorzugt ausgewählt ist aus der Gruppe bestehend aus Nylon, wobei der textile Festigkeitsträger ganz besonders bevorzugt aus diesen Materialien besteht. Geeignete Polyester umfassen beispielsweise Polyethylenterephthalat (PET), Polyethylennaphthalat (PEN), Polybutylenterephthalat (PBT), Polyethylenfuranoat (PEF) und Polyesterpolyacrylate, die beispielsweise von der Celanese AG unter dem Handelsnamen Vectran angeboten werden. Beispiele für Polyamide sind Nylon-4,6 (PA 4.6), Nylon-4, 10 (PA 4.10), Nylon-6 (PA 6), Nylon-6,6 (PA 6.6 Polyhexamethylenadipamid), Nylon-6, 12 (PA 6.12), Nylon-10,10 (PA 10.10) und Nylon-12,12 (PA 12.12). Geeignete Polyamide sind beispielsweise aromatische Polyamide wie Aramide, insbesondere m-Aramid, p-Aramid und Mischungen aus m-Aramid und p-Aramid. Geeignete Cellulosen sind beispielsweise regenerierte Cellulosen (insbesondere Viskose oder Rayon) und Celluloseester.

Bevorzugt ist auch ein erfindungsgemäßes Verfahren, wobei der textile Festigkeitsträger einen oder mehrere Verstärkungskorde umfasst, bevorzugt in der Form eines Gewebes, welche jeweils zumindest ein Garn umfassen. Beispielsweise kann das textile Verstärkungsmaterial in Form von ein- oder mehrfädigen Textilkorden oder in Form von flächigen Fadengebilden wie Bändchen auf Basis von ein- oder mehrfädigen Garnen vorliegen.

Bevorzugt ist vor diesem Hintergrund ein erfindungsgemäßes Verfahren, wobei der textile Festigkeitsträger einen oder mehrere Verstärkungskorde umfasst, bevorzugt in der Form eines Gewebes, welche jeweils zumindest zwei unterschiedliche Garne umfassen, wobei die Garne jeweils bevorzugt aus einem Material bestehen, welches ausgewählt ist aus der Gruppe bestehend aus Polyestern, Polyamiden, Polyurethanen, Glas, Kohlenstoff, Cellulosen, Polycarbonaten und Polyketonen.

Bevorzugt ist grundsätzlich ein erfindungsgemäßes Verfahren, wobei zumindest eines der Garne, bevorzugt sämtliche Garne, in den Verstärkungskorden eine Feinheit im Bereich von 90 bis 5000 dtex, bevorzugt im Bereich von 100 bis 2500 dtex oder im Bereich von 2500 bis 4500 dtex, besonders bevorzugt im Bereich von 200 bis 1500 dtex oder im Bereich von 3000 bis 4000 dtex, aufweist.

Bevorzugt ist ein grundsätzlich auch erfindungsgemäßes Verfahren, wobei zumindest eines der Garne, bevorzugt sämtliche Garne, in den Verstärkungskorden mit 100 bis 600 T/m, bevorzugt mit 150 bis 550 T/m, besonders bevorzugt mit 200 bis 500 T/m, verdreht ist.

Bevorzugt ist grundsätzlich zudem ein erfindungsgemäßes Verfahren, wobei das Polyamidgarn einen Twistfaktor im Bereich von 100 bis 400, bevorzugt im Bereich von 150 bis 350, aufweist. Der Twistfaktor $\alpha$ ist eine dem Fachmann bekannte Größe und berechnet sich aus dem Twistlevel in T/m ("turns per meter") und der Feinheit in tex:

$$\alpha = T/m \sqrt{\frac{tex}{1000}}$$

Bevorzugt ist grundsätzlich ebenfalls ein erfindungsgemäßes Verfahren, wobei zumindest einer der Verstärkungskorde, bevorzugt sämtliche Verstärkungskorde, zwei oder mehr Garne umfasst, wobei die Garne im Verstärkungskord bevorzugt mit 100 bis 600 T/m, besonders bevorzugt mit 150 bis 550 T/m, ganz besonders bevorzugt mit 200 bis 500 T/m, miteinander endverdreht sind.

Bevorzugt ist grundsätzlich auch ein erfindungsgemäßes Verfahren, wobei zumindest einer der Verstärkungskorde, bevorzugt sämtliche Verstärkungskorde, eine Gesamtfeinheit im Bereich von 180 bis 10000 dtex, bevorzugt im Bereich von 200 bis 7500 dtex, besonders bevorzugt im Bereich von 400 bis 5000 dtex, aufweist.

Für den Fachmann versteht es sich, dass in dem erfindungsgemäßen Verfahren auch mehrere Festigkeitsträger verarbeitet und in ein entsprechendes vulkanisierbares Verbundmaterial eingearbeitet werden können. Für die überwiegende Anzahl an Fällen ist eine entsprechende Verfahrensführung sogar bevorzugt. Bevorzugt ist entsprechend ein erfindungsgemäßes Verfahren, wobei das Verfahren für zwei oder mehrere textile Festigkeitsträger durchgeführt wird.

Die Herstellung von vulkanisierbaren Gummierungsmischungen, die nach der Vulkanisation in lichtdurchlässigen, insbesondere transparenten, vulkanisierten Gummierungsmischungen resultieren, ist dem Fachmann prinzipiell aus dem Stand der Technik bekannt, beispielsweise aus der DE 8234954 U1, der US 6624220 B1 und der US 2004/0044118 A1, so dass sich der Fachmann bei der Herstellung am Stand der Technik orientieren kann.

Wie vorstehend beschrieben ist es möglich, lediglich Teile der Gummierung lichtdurchlässig auszubilden, bspw. indem die vernetzbare Gummierungsmischung aus mehreren Teilgummierungsmischungen besteht. Auch wenn dies gerade in Bezug auf die optische Wirkung bevorzugt sein kann, sind bedingt durch die einfachere Fertigung doch in den meisten Fällen solche Gummierungen bevorzugt, die im Wesentlichen in ihrer Gesamtheit lichtdurchlässig ausgebildet sind. Bevorzugt ist somit ein erfindungsgemäßes Verfahren, wobei die vernetzbare Gummierungsmischung zwei oder mehr separate Teilgummierungsmischungen umfasst, wobei zumindest eine Teilgummierungsmischung durch Vulkanisation zu einer vernetzten Teilgummierungsmischung verarbeitet werden kann, die für sichtbares Licht zumindest teilweise durchlässig ist. Bevorzugt ist alternativ ein erfindungsgemäßes Verfahren, wobei die vernetzbare Gummierungsmischung durch Vulkanisation zu einer vernetzten Gummierungsmischung verarbeitet werden kann, die im Wesentlichen in ihrer Gesamtheit für sichtbares Licht zumindest teilweise durchlässig ist.

Mit Blick auf die relevanten Wellenlängenbereiche, in denen die Gummierung lichtdurchlässig sein sollte, lässt sich ein geeigneter Bereich definieren, wobei es besonders bevorzugt ist, wenn die Gummierung im Wesentlichen nicht diffus streut, so dass diese transparent ist. Bevorzugt ist somit ein erfindungsgemäßes Verfahren, wobei die vernetzbare Gummierungsmischung durch Vulkanisation zu einer vernetzten Gummierungsmischung verarbeitet werden kann, die zumindest abschnittweise, bevorzugt im Wesentlichen in ihrer Gesamtheit, für sichtbares Licht mit einer Wellenlänge im Bereich von 380 bis 780 nm zumindest teilweise durchlässig ist. Bevorzugt ist ebenfalls ein erfindungsgemäßes Verfahren, wobei die vernetzbare Gummierungsmischung durch Vulkanisation zu einer vernetzten Gummierungsmischung verarbeitet werden kann, die zumindest abschnittweise, bevorzugt im Wesentlichen in ihrer Gesamtheit, für sichtbares Licht zumindest teilweise transparent ist.

Die Erfinder der vorliegenden Erfindung konnten für die vernetzbare Gummierungsmischung besonders geeignete Zusammensetzungen identifizieren.

Bevorzugt ist nämlich ein erfindungsgemäßes Verfahren, wobei die vernetzbare Gummierungsmischung wenigstens einen Dienkautschuk umfasst, wobei der Dienkautschuk bevorzugt ausgewählt ist aus der Gruppe bestehend aus halogenierten Copolymeren eines C4 bis C7 Isoolefins und eines Alkylstyrols, natürlichem Polyisopren (NR), synthetischem Polyisopren (IR), Butadienkautschuk (BR), Styrol-ButadienKautschuk (SBR), Styrol-Isopren-Kautschuk, Butylkautschuk, Nitrilkautschuk (NBR), Chloropren-Kautschuk, Isopren-ButadienKautschuk und Ethylen-Propylen-Kautschuk, wobei der Dienkautschuk besonders bevorzugt ausgewählt ist aus der Gruppe bestehend aus bromierten Copolymeren aus Isobutylen und para-Metyhlstyrol, natürlichem Polyisopren, synthetischem Polyisopren und cis-1,4-Butadienkautschuk. Beispielsweise kann das Polyisopren (IR, NR) entweder cis-1,4-Polyisopren oder 3,4-Polyisopren sein. Bevorzugt werden jedoch cis-1,4-Polyisoprene mit einem cis-1,4-Gehalt > 90 Gew.-% verwendet. Beispielsweise ist es möglich, ein solches Polyisopren durch stereospezifische Polymerisation in Lösung mit Ziegler-Natta-Katalysatoren oder unter Verwendung feinteiliger Lithiumalkyle zu erhalten. Zudem ist Naturkautschuk (NR) ein solches cis-1,4-Polyisopren; der cis-1,4-Gehalt im Naturkautschuk ist größer als 99 Gew.-%.

Das Polybutadien (BR) kann beispielsweise cis-1,4-Polybutadien oder Vinylpolybutadien sein (Vinylgehalt etwa 10 bis 90 Gew.-%). Bevorzugt wird cis-1,4-Polybutadien mit einem cis-1,4-Gehalt größer 90 Gew.-% eingesetzt, das beispielsweise durch Lösungspolymerisation in Gegenwart von Katalysatoren vom Typ der Seltenen Erden hergestellt werden kann.

Bei den Styrol-Butadien-Copolymeren (SBR) kann es sich beispielsweise um lösungspolymerisierte Styrol-Butadien-Copolymere (S-SBR) mit einem Styrolgehalt bezogen auf das Polymer von etwa 10 bis 45 Gew.-% und einem Vinylgehalt (d.h. Gehalt von 1, 2-gebundenem Butadien, bezogen auf das Gesamtpolymer) von 10 bis 70 Gew.-% handeln, das beispielsweise unter Verwendung von Lithiumalkylen in organischen Lösungsmitteln hergestellt werden kann. Der S-SBR kann auch gekoppelt und endgruppenmodifiziert sein. Alternativ können emulsionspolymerisierte Styrol-Butadien-Copolymere (E-SBR) und Mischungen aus E-SBR und S-SBR eingesetzt werden. Der Styrolgehalt des E-SBR beträgt etwa 15 bis 50 Gew.-%, wobei beispielsweise die aus dem Stand der Technik bekannten Produkte eingesetzt werden können, die durch Copolymerisation von Styrol und 1,3-Butadien in wässriger Emulsion erhalten wurden.

Beispielsweise kann das halogenierte Copolymer eines C4 bis C7 Isoolefins und eines Alkylstyrols aus einem Isobutylen und einem Methylstyrol bestehen, wobei die Styroleinheit ortho-, meta- oder paraalkyliert sein kann. Das Copolymer kann mit einem beliebigen Halogen halogeniert sein. Vorzugsweise wird ein bromiertes Copolymer aus Isobutylen und para-Methylstyrol eingesetzt. Die in der Mischung eingesetzten Dienkautschuke, insbesondere Styrol-Butadien-Copolymere, können auch teil- oder vollfunktionalisiert eingesetzt werden. Die Funktionalisierung kann mit Gruppen erfolgen, die mit den eingesetzten Füllstoffen wechselwirken können, insbesondere mit OH-Gruppen tragenden Füllstoffen. Funktionalisierungen können beispielsweise solche mit Hydroxylgruppen und/oder Epoxygruppen und/oder Siloxangruppen und/oder Aminogruppen und/oder Phthalocyaningruppen und/oder Carboxylgruppen und/oder Silansulfidgruppen sein.

Bevorzugt ist insoweit ein erfindungsgemäßes Verfahren, wobei die vernetzbare Gummierungsmischung 25 bis 100 phr, bevorzugt 50 bis100 phr, besonders bevorzugt 70 bis 100 phr des wenigstens einen Dienkautschuks umfasst.

Bevorzugt ist zudem ein erfindungsgemäßes Verfahren, wobei die vernetzbare Gummierungsmischung 15 bis 50 phr eines bromierten Copolymers aus Isobutylen und para-Metyhlstyrol und/oder 25 bis 85 phr an natürlichem und/oder synthetischem Polyisopren und/oder 15 bis 50 phr an cis-1,4-Butadienkautschuk umfasst.

Bevorzugt ist auch ein erfindungsgemäßes Verfahren, wobei die vernetzbare Gummierungsmischung 10 bis 90 phr, bevorzugt 15 bis 40 phr, eines Füllstoffs umfasst, bevorzugt amorphes Siliciumdioxid, insbesondere gefällte Kieselsäure, wobei die vernetzbare Gummierungsmischung ganz besonders bevorzugt einen polaren Füllstoff, insbesondere amorphes Siliciumdioxid, und eine oder mehrere Silan-Verbindungen zum Anbinden der polaren Füllstoffe umfasst. Der Füllstoff kann dabei ein beliebiges geeignetes Material sein, das im Stand der Technik zur Verwendung als Füllstoff bekannt ist, oder eine Mischung dieser Materialien. Die Gummierungsmischung umfasst vorzugsweise Kieselsäure als Füllstoff, wobei dies in der Fachwelt amorphes Siliciumdioxid bezeichnet. Es kann sich um die für Reifenkautschukmischungen üblichen Kieselsäuren handeln. Besonders bevorzugt ist es, wenn eine fein verteilte, gefällte Kieselsäure verwendet wird, die eine CTAB-Oberfläche (gemäß ASTM D 3765) von 30 bis 350 m$^2$/g, vorzugsweise von 120 bis 250 m$^2$/g, aufweist. Als Kieselsäuren können beispielsweise sowohl konventionelle Kieselsäure wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen.

Für manche Anwendungen bevorzugt ist ein erfindungsgemäßes Verfahren, wobei die vernetzbare Gummierungsmischung zusätzlich 0,1 bis 10 phr, an weiteren Füllstoffen umfasst, wobei die weiteren Füllstoffe ausgewählt sind aus der Gruppe bestehend aus Alumosilikaten, Kreide, Stärke, Magnesiumoxid, Titandioxid, Kautschukgele und Kombinationen dieser Füllstoffe. Alternativ bevorzugt ist ein erfindungsgemäßes Verfahren, wobei die vernetzbare Gummierungsmischung weniger als 0,005 phr bevorzugt weniger als 0,001 phr der weiteren Füllstoffe umfasst. Zum Erhalt von füllstoffhaltigen, lichtdurchlässigen Gummierungen ist es regelmäßig zielführend, den Gehalt an schwarzen Pigmenten und anderen Farbmitteln möglichst gering zu halten. Bevorzugt ist daher ein erfindungsgemäßes Verfahren, wobei die vernetzbare Gummierungsmischung weniger als 1 phr, bevorzugt weniger als 0,1 phr, besonders bevorzugt weniger als 0,01 phr an schwarzen Farbmitteln, insbesondere schwarzen Pigmenten, insbesondere Ruß, Graphen oder Kohlenstoffnanoröhren, als Füllstoff umfasst.

Die Vulkanisation der vernetzbaren Gummierungsmischung wird regelmäßig in Anwesenheit von Schwefel und/oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 8 phr, Schwefel bevorzugt in Mengen von 0,4 bis 4 phr) der Gummierungsmischung zugesetzt. Die Vulkanisation kann auch in Anwesenheit von sehr geringen Schwefelmengen in Kombination mit schwefelspendenden Substanzen erfolgen. Des Weiteren kann die Gummierungsmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisationseigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide, Thiophosphate. Die Beschleuniger können auch in Kombination miteinander eingesetzt werden, wobei sich synergistische Effekte ergeben können. Bevorzugt ist vor diesem Hintergrund ein erfindungsgemäßes Verfahren, wobei die vernetzbare Gummierungsmischung 0,4 bis 8,0 phr, bevorzugt 0,4 bis 4 phr, besonders bevorzugt 0,5 bis 2,5 phr, Schwefel umfasst, wobei die vernetzbare Gummierungsmischung bevorzugt ein oder mehrere weitere Vulkanisationsadditive umfasst, die ausgewählt sind aus der Gruppe bestehend aus Vulkanisationsbeschleuniger, Vulkanisationsverzögerer und Vulkanisationsaktivatoren.

Bevorzugt ist zudem ein erfindungsgemäßes Verfahren, wobei die vernetzbare Gummierungsmischung ein oder mehrere Additive umfasst, die ausgewählt sind aus der Gruppe bestehend aus Kupplungsagenzien, insbesondere Silan-Kupplungsagenzien, Weichmachern, Alterungsschutzmitteln, Aktivatoren, Wachsen, Klebharzen, Mastifikationshilfsmitteln und Verarbeitungshilfsmitteln. Als Weichmacher kommen dabei alle dem Fachmann bekannten Weichmacher in Frage, beispielsweise aromatische, naphthenische oder paraffinische Mineralölweichmacher, wie z. B. MES (mild extraction solvate) oder TDAE (treated distillate aromatic extract), oder Rubber-to-Liquid-Öle (RTL) oder Gas-to-Liquid-Öle (GTL) oder Biomass-to-Liquid-Öle (BTL; wie sie beispielsweise in der DE 10 2008 037 714 A1 offenbart sind) oder Öle auf Basis nachwachsender Rohstoffe, wie z. B. Rapsöl, Terpenöle (z. B. Orangenöle) oder Faktisse oder Weichmacherharze oder Flüssig-Polymere (wie Flüssig-BR), deren mittleres Molekulargewicht (Bestimmung per GPC = gel permeation chromatography, in Anlehnung an BS ISO 11344:2004 ) zwischen 500 und 20000 g/mol liegt. Werden in der Gummierungsmischung Flüssig-Polymere als Weichmacher eingesetzt, so gehen diese nicht als Kautschuk in die Berechnung der Zusammensetzung der Polymermatrix (phr-Berechnung) ein. Bei der Verwendung von Mineralöl sind Weißöle besonders bevorzugt. Alterungsschutzmittel sind beispielsweise Substanzen wie N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD) und 2,2,4-Trimethyl-1,2-dihydrochinolin (TMQ). Als Aktivatoren kommen beispielsweise Zinkoxid, Zinkcarbonat und Fettsäuren (z. B. Stearinsäure) zum Einsatz. Ein Beispiel für ein Mastikationshilfsmittel ist z. B. 2,2'-Dibenzamidodiphenyldisulfid (DBD). Zu den Verarbeitungshilfsmitteln zählen etwa Fettsäuresalze, wie z. B. Zinkseifen, und Fettsäureester und deren Derivate, wie z. B. PEG-Carbonsäureester.

Besonders ansprechende optische Effekte lassen sich erzeugen, wenn die vernetzbare Gummierungsmischung farbig lichtdurchlässig, insbesondere farbig transparent, ausgebildet wird, d.h. im sichtbaren Spektrum des Lichts ein ungleichmäßiges Absorptionsverhalten zeigt, was durch Farbstoffe erreicht werden kann. Bevorzugt ist deshalb ein erfindungsgemäßes Verfahren, wobei die vernetzbare Gummierungsmischung einen oder mehrere Farbstoffe umfasst.

Als wässrige Dispersion für die Haftaktivierung sind insbesondere solche Systeme geeignet, die beispielsweise in der WO 2019/015792 A1 sowie der EP 3702521 A1, der EP 3702522 A1 und der EP 3702523 A1 offenbart sind.

Grundsätzlich bevorzugt ist insoweit ein erfindungsgemäßes Verfahren, wobei die wässrige Dispersion umfasst:

(w1) wenigstens einen Kautschuklatex, unter der Vorgabe, dass dieser Kautschuklatex kein Polyisoprenkautschuk-Latex (incl. synthetischem und natürlichem Polyisoprenkautschuk-Latex) ist, und

(w2) wenigstens ein geschütztes Isocyanat, und

(w3) wenigstens einen Füllstoff und/oder wenigstens ein Polymer mit Carbonsäure-funktionellen Gruppen und/oder wenigstens einen Polyisoprenkautschuk (incl. synthetischen und natürlichem Polyisoprenkautschuk-Latex) und/oder wenigstens ein Wachs.

Als Kautschuklatex kommt beispielsweise VP-Latex in Betracht. VP-Latex ist dem Fachmann bekannt. "VP" steht für "Vinyl-Pyridin", wobei bekannte VP-Latizes auch zusätzliche Monomere umfassen können. Ein bevorzugtes Beispiel für einen VP-Latex ist ein Vinyl-Pyridin-Latex, welcher typischerweise 15 % Vinyl-Pyridin, 15 % Styrol und 70 % Butadien Monomere umfasst. Neben dem VP-Latex kann die wässrige Dispersion einen oder mehrere zusätzliche Latizes umfassen, wie etwa ein Styrol-Butadien-Latex (SBR) und Naturlatex (NR).

Für den Isoprenkautschuk ist die Verwendung von Naturlatex mit hohem Ammoniakgehalt bevorzugt, der vom "Hevea Brasiliens" Baum stammt.

Geeignete Polyisocyanat-Verbindungen als Bestandteil von Bädern/Dips für textile Festigkeitsträger sind dem Fachmann prinzipiell bekannt. Die Polyisocyanat-Verbindung kann dabei mit einer anderen Verbindung geblockt oder als Dimer oder höheres Homolog, also "mit sich selbst geblockt" (engl. "self-blocked") vorliegen. Geblockte Polyisocyanate werden beispielsweise und bevorzugt dadurch erhalten, dass freie Isocyanate mit wenigstens einer Substanz geblockt werden, welche ausgewählt ist aus der Gruppe bestehend aus Phenol, Thiophenol, Chlorphenol, Cresol, Resorcin, p-sec-Butylphenol, p-tert-Butylphenol, p-sec-Amylphenol, p-Octylphenol, p-Nonylphenol, tert-Butylalkohol, Diphenylamin, Dimethylanilin, Phthalimid, δ-Valerolactam, ε-Caprolactam, Malonsäuredialkylester, Acetylaceton, Acetessigsäurealkylester, Acetoxim, Methylethylketoxim, 3,5-Dimethylpyrazol, Cyclohexanonoxim, 3-Hydroxypyridin und saurem Natriumsulfit. Bevorzugt ist es im Rahmen der vorliegenden Erfindung, dass die Polyisocyanat-Verbindung Bausteine umfasst, die ausgewählt sind aus der Gruppe bestehend aus Tetramethylendiisocyanat, Hexamethylendiisocyanat, Diphenylmethan-4,4'-Diisocyanat, Octamethylendiisocyanat, Decamethylendiisocyanat, Dodecamethylendiisocyanat, aromatische Diisocyanate umfassend 2,4- oder 2,6- Toluoldiisocyanat, Tetramethylxyloldiisocyanat, p-Xyloldiisocyanat, 2,4'- oder 4,4'- Diisocyanatdiphenylmethan, 1,3- oder 1,4-Phenyldiisocyanat.

Die Polycarbonsäure basiert beispielsweise zu 10 bis 100 mol-%, bevorzugt zu 30 bis 100 mol.-%, besonders bevorzugt zu 50 bis 100 mol.-%, ganz besonders bevorzugt zu 70 bis 100 mol.-%, insbesondere bevorzugt zu 90 bis 100 mol.-% auf Carbonsäuregruppen-haltigen Monomeren. Gemäß einer besonders vorteilhaften Ausführungsform der Erfindung basiert die Polycarbonsäure zu 100 mol-% auf Carbonsäuregruppen-haltigen Monomeren, wobei weitere funktionelle Gruppen nicht ausgeschlossen werden. Bevorzugt weist die Polycarbonsäure ein Gewichtsmittel des Molekulargewichtes Mw gemäß GPC von 1.000 bis 500.000 g/mol, bevorzugt von 3.000 bis 100.000 g/mol auf. Bevorzugt basiert die Polycarbonsäure auf Acrylsäure-, Methacrylsäure-, Itaconsäure-, Crotonsäure-, Zimtsäure- und/oder Maleinsäure-Monomeren. Gemäß einer bevorzugten Ausführungsform handelt es sich bei der Polycarbonsäure (auf Basis von Acrylsäure-Monomeren) um ein Acrylharz.

Geeignete Epoxy-Verbindungen als Bestandteil entsprechender wässriger Dispersionen sind dem Fachmann grundsätzlich bekannt. Bevorzugt ist es im Rahmen der vorliegenden Erfindung, dass die Epoxy-Verbindung ausgewählt ist aus der Gruppe bestehend aus Glycidyl-basiertem Glycerol, Sorbitol basierten Epoxy-Verbindungen, Phenol-basierten Novolak Epoxy-Verbindungen und Cresol-basierten Novolak Epoxy-Verbindungen. Besonders geeignet als Epoxy-Verbindung ist beispielsweise ein Glycerol-basierter Polyglycidylether, wie z. B. Denacol™ EX-313, welcher u. a. in der DE 69722388 T2 beschrieben ist.

Mögliche Wachse als Bestandteil entsprechender wässriger Dispersionen sind dem Fachmann grundsätzlich bekannt. Bevorzugte Beispiele sind paraffinische Wachse, mikrokristalline Wachse, synthetische Wachse und Wachse aus natürlichen Quellen wie z.B. Bienenwachs, wobei auch Kombinationen von zwei oder mehreren Wachsen umfasst sind.

Als Füllstoffe für die wässrige Dispersion besonders geeignet sind wasserdispergierbare anorganische Füllstoffe. Besonders bevorzugt sind amorphes Siliciumdioxid (insbesondere gefällte Kieselsäure) und Silikate mit einer BET-Oberfläche (gemäß ISO 9277:2010) von 30 bis 450 $m^2$/g, vorzugsweise von 120 bis 410 $m^2$/g.

Die wässrige Dispersion hat bevorzugt einen pH-Wert von 5 bis 11, bevorzugt von 7 bis 11, der zweckmäßiger Weise mit einer Base eingestellt werden kann. Die Base ist bevorzugt eine flüchtige Base, die oder deren Bestandteile während des Verfahrens verdampfen. Gemäß einer besonders vorteilhaften Ausführungsform der Erfindung ist die Base Ammoniumhydroxid, also eine wässrige Lösung von Ammoniak.

Bevorzugt ist im Lichte der vorstehenden Ausführungen ein erfindungsgemäßes Verfahren, wobei die wässrige Dispersion umfasst:

(x1) wenigstens einen Kautschuklatex, bevorzugt in einem auf das Trockengewicht der wässrigen Dispersion bezogenem Massenanteil von 4 bis 60 %, und

(x2) wenigstens ein geschütztes Isocyanat, bevorzugt in einem auf das Trockengewicht der wässrigen Dispersion bezogenem Massenanteil von 0,1 bis 10 %.

Bevorzugt ist zudem ein erfindungsgemäßes Verfahren, wobei die wässrige Dispersion umfasst:

(y1) wenigstens eine Verbindung, die eine Epoxy-Gruppe enthält, bevorzugt in einem auf das Trockengewicht der wässrigen Dispersion bezogenem Massenanteil von bis zu 6 %,
und/oder

(y2) wenigstens ein Polymer mit Carbonsäure-funktionellen Gruppen, bevorzugt in einem auf das Trockengewicht der wässrigen Dispersion bezogenem Massenanteil von bis zu 15 %.

Besonders bevorzugt ist ein erfindungsgemäßes Verfahren, wobei die wässrige Dispersion eine der folgenden Komponenten umfasst:

(z1) wenigstens einen Füllstoff, bevorzugt in einem auf das Trockengewicht der wässrigen Dispersion bezogenem Massenanteil von 0,02 bis 20 %, bevorzugt mit der Maßgabe, dass die wässrige Dispersion kein Polymer mit Carbonsäure-funktionellen Gruppen umfasst,

oder

(z2) wenigstens einen Polyisoprenkautschuk-Latex, bevorzugt in einem auf das Trockengewicht der wässrigen Dispersion bezogenem Massenanteil von 1 bis 20 %, bevorzugt mit der Maßgabe, dass die wässrige Dispersion wenigstens einen Kautschuklatex umfasst, welcher kein Polyisoprenkautschuk-Latex ist,
oder

(z3) wenigstens ein Wachs, bevorzugt in einem auf das Trockengewicht der wässrigen Dispersion bezogenem Massenanteil von 0,3 bis 30 %.
Unter den möglichen wässrigen Dispersionen für die Haftaktivierung sind nach Einschätzung der Erfinder drei spezifische Ausführungsformen besonders geeignet.

Bevorzugt ist nämlich zum einen ein erfindungsgemäßes Verfahren, wobei die wässrige Dispersion umfasst:

(h1) wenigstens einen Kautschuklatex, in einem auf das Trockengewicht der wässrigen Dispersion bezogenem Massenanteil von 4 bis 50 %, bevorzugt von 4,5 bis 25 %,

(h2) wenigstens ein geschütztes Isocyanat, in einem auf das Trockengewicht der wässrigen Dispersion bezogenem Massenanteil von 0,1 bis 4,5 %, bevorzugt von 0,2 bis 4 %,

(h3) wenigstens einen Füllstoff, in einem auf das Trockengewicht der wässrigen Dispersion bezogenem Massenanteil von 0,02 bis 20 %, bevorzugt von 0,3 bis 15 %.

Bevorzugt ist alternativ ein erfindungsgemäßes Verfahren, wobei die wässrige Dispersion umfasst:

(i1) wenigstens einen Kautschuklatex, in einem auf das Trockengewicht der wässrigen Dispersion bezogenem Massenanteil von 4 bis 50 %, bevorzugt von 4,5 bis 25 %,

(i2) wenigstens ein geschütztes Isocyanat, in einem auf das Trockengewicht der wässrigen Dispersion bezogenem Massenanteil von 0,1 bis 10 %, bevorzugt 0,2 bis 4,5 %,

(i3) wenigstens ein Wachs, in einem auf das Trockengewicht der wässrigen Dispersion bezogenem Massenanteil von 0,3 bis 30 %, bevorzugt von 0,5 bis 15 %.

Bevorzugt ist wiederum alternativ ein erfindungsgemäßes Verfahren, wobei die wässrige Dispersion umfasst:

(j1) wenigstens einen Kautschuklatex, in einem auf das Trockengewicht der wässrigen Dispersion bezogenem Massenanteil von 4 bis 40 %, bevorzugt 4,5 bis 20 %, wobei der Kautschuklatex kein Polyisoprenkautschuk-Latex ist,

(j2) wenigstens ein geschütztes Isocyanat, in einem auf das Trockengewicht der wässrigen Dispersion bezogenem Massenanteil von 0,1 bis 10 %, bevorzugt 0,2 bis 4,5 %,

(j3) wenigstens einen Polyisoprenkautschuk-Latex, bevorzugt in einem auf das Trockengewicht der wässrigen Dispersion bezogenem Massenanteil von 1 bis 20 %, bevorzugt 2 bis 15 %.

Unter Ausnutzung der vorteilhafterweise fehlenden Eigenfärbung der wässrigen Dispersion kann die erzeugte Haftaktivierung besonders leicht eingefärbt werden. Bevorzugt ist deshalb ein erfindungsgemäßes Verfahren, wobei die wässrige Dispersion ein oder mehrere Pigmente und/oder Farbstoffe umfasst.

Auch wenn ein anderes Auftragsverfahren möglich ist, wird die wässrige Dispersion bevorzugt als Dip appliziert. Bevorzugt ist daher ein erfindungsgemäßes Verfahren, wobei das Behandeln in Schritt b) ein Eintauchen des textilen Festigkeitsträgers in die wässrige Dispersion umfasst, wobei das Behandeln bevorzugt zudem die Heißverstreckung der getauchten textilen Festigkeitsträger umfasst.

Die mit dem erfindungsgemäßen Verfahren hergestellten vulkanisierbaren Verbundmaterialien können in Rohlingen verbaut werden, bspw. in Rohlingen für Fahrradreifen. Bevorzugt ist folglich auch ein erfindungsgemäßes Verfahren, zusätzlich umfassend den Schritt: d) Herstellen eines unvulkanisierten Rohlings, insbesondere eines unvulkanisierten Fahrzeugreifenrohlings, umfassend das vulkanisierbare Verbundmaterial.

Aus den vorstehend gefertigten unvulkanisierten Rohlingen, bzw. in weniger bevorzugten Fällen auch lediglich aus den unvulkanisierten Verbundmaterialien, können durch Vulkanisation die vorteilhaften vulkanisierten Verbundmaterialien bzw. die diese vulkanisierten Verbundmaterialien umfassenden elastomeren Erzeugnisse hergestellt werden. Die Erfindung betrifft daher auch ein Verfahren zur Herstellung eines elastomeren Erzeugnisses, insbesondere eines Fahrzeugreifens, oder eines vulkanisierten Verbundmaterials, umfassend die Schritte des erfindungsgemäßen Verfahrens zur Herstellung eines vulkanisierbaren Verbundmaterials, sowie zusätzlich zumindest einen der Schritte:

e) Vulkanisieren des vulkanisierbaren Verbundmaterials zum Erhalt eines vulkanisierten Verbundmaterials, und/oder

f) Vulkanisieren des unvulkanisierten Rohlings zum Erhalt eines elastomeren Erzeugnisses.

Bevorzugt ist insoweit ein erfindungsgemäßes Verfahren, wobei das elastomere Erzeugnis ein Fahrradreifen ist, wobei die Breite des Reifenmantels quer zur Umlaufrichtung bevorzugt im Bereich von 20 bis 70 mm, bevorzugt im Bereich von 25 bis 65 mm liegt und/oder wobei der Innendurchmesser des Reifenmantels bevorzugt im Bereich von 340 bis 640 mm, bevorzugt im Bereich von 550 bis 630 mm liegt.

Ganz besonders bevorzugt ist ein erfindungsgemäßes Verfahren, wobei das elastomere Erzeugnis ein Fahrzeugreifen ist, welcher das vulkanisierte Verbundmaterial als Teil der Karkasse umfasst, bevorzugt im Bereich der Seitenwand, wobei das vulkanisierte Verbundmaterial bevorzugt zumindest abschnittsweise zusätzlich von einer vulkanisierten Kautschukmischung bedeckt ist, die für sichtbares Licht zumindest teilweise durchlässig ist.

Im Lichte der vorstehenden Ausführungen ist es für den Fachmann ersichtlich, dass die Erfindung auch das mit dem erfindungsgemäßen Verfahren hergestellte vulkanisierbare Verbundmaterial, das daraus herstellbare vulkanisierte Verbundmaterial und die entsprechenden elastomeren Erzeugnisse betrifft, wobei sich jeweils die vorstehend diskutierten Vorteile ergeben.

Die Erfindung betrifft somit auch ein vulkanisierbares Verbundmaterial für die Herstellung von elastomeren Erzeugnissen, insbesondere von Fahrzeugreifen, bevorzugt hergestellt oder herstellbar mit dem erfindungsgemäßen Verfahren zur Herstellung eines vulkanisierbaren Verbundmaterials, umfassend:

i) zumindest einen textilen Festigkeitsträger, welcher zumindest abschnittsweise, bevorzugt im Wesentlichen vollständig, mit einer wässrigen Dispersion haftaktiviert ist, und

ii) eine vernetzbare Gummierungsmischung, die den textilen Festigkeitsträger umgibt,

wobei die wässrige Dispersion im Wesentlichen frei ist von freiem Resorcin sowie Resorcin-Vorkondensaten, insbesondere Resorcin-Formaldehyd-Vorkondensaten, und frei ist von freiem Formaldehyd sowie Formaldehyd freisetzenden Substanzen,

wobei die vernetzbare Gummierungsmischung durch Vulkanisation zu einer vernetzten Gummierungsmischung verarbeitet werden kann, die zumindest abschnittsweise für sichtbares Licht zumindest teilweise durchlässig ist.

Da es sich bei der mittels der wässrigen Dispersion erzeugten Haftaktivierung um eine komplexe Beschichtung handelt, deren Struktur inhärent nicht präzise beschrieben werden kann, ist es notwendig, die im erfindungsgemäßen vulkanisierbaren Verbundmaterial eingesetzten textilen Festigkeitsträger über die erfahrene Haftaktivierung zu definieren.

Bevorzugt ist insoweit ein erfindungsgemäßes vulkanisierbares Verbundmaterial, wobei der textile Festigkeitsträger an sämtlichen von der vernetzbaren Gummierungsmischung umgebenen Abschnitten mit der wässrigen Dispersion haftaktiviert ist.

Die Erfindung betrifft folglich ebenfalls ein vulkanisiertes Verbundmaterial, hergestellt oder herstellbar durch Vulkanisation des erfindungsgemäßen vulkanisierbaren Verbundmaterials, bevorzugt mit dem erfindungsgemäßen Verfahren zur Herstellung eines vulkanisierten Verbundmaterials, umfassend eine vernetzte Gummierungsmischung, die für sichtbares Licht zumindest teilweise durchlässig ist.

Die Erfindung betrifft ebenfalls ein elastomeres Erzeugnis, insbesondere Fahrzeugreifen, umfassend ein erfindungsgemäßes vulkanisiertes Verbundmaterial, bevorzugt hergestellt oder herstellbar mit dem erfindungsgemäßen Verfahren zur Herstellung eines elastomeren Erzeugnisses.

Bevorzugt ist insoweit ein elastomeres Erzeugnis, wobei das elastomere Erzeugnis ein Fahrzeugreifen ist, welcher das vulkanisierte Verbundmaterial als Teil der Karkasse umfasst, bevorzugt im Bereich der Seitenwand, wobei das vulkanisierte Verbundmaterial zumindest abschnittsweise zusätzlich von einer vulkanisierten Kautschukmischung bedeckt ist, die für sichtbares Licht zumindest teilweise durchlässig ist.

Bevorzugt ist zudem ein elastomeres Erzeugnis, zusätzlich umfassend im Bereich des vulkanisierten Verbundmaterials eine oder mehrere aufvulkanisierte Gummietiketten und/oder einen Aufdruck, bevorzugt eine oder mehrere aufvulkanisierte Gummietiketten.

Die Erfindung betrifft abschließend auch die Verwendung einer wässrigen Dispersion zur Haftaktivierung von textilen Festigkeitsträgern für Verbundmaterialien mit transparenten Gummierungsmischungen zur Verbesserung der visuellen Identifizierbarkeit der textilen Festigkeitsträger in der transparenten Gummierungsmischung und/oder zur Verringerung von optischen Defekten im Kontaktbereich zwischen den textilen Festigkeitsträgern und der transparenten Gummierungsmischung, wobei die wässrige Dispersion im Wesentlichen frei ist von freiem Resorcin sowie Resorcin-Vorkondensaten, insbesondere Resorcin-Formaldehyd-Vorkondensaten, und frei ist von freiem Formaldehyd sowie Formaldehyd freisetzenden Substanzen.

Nachfolgend wird eine beispielhafte Ausgestaltung des erfindungsgemäßen Verfahrens vorgeschlagen, bei der es sich nach Einschätzung der Erfinder um eine besonders vorteilhafte Ausgestaltung handelt. Zudem wird ein mit diesem beispielhaften Verfahren hergestellter erfindungsgemäßer Fahrradreifen vorgeschlagen, bei dem es sich nach Einschätzung der Erfinder ebenfalls um eine besonders günstige Ausführungsform eines erfindungsgemäßen Erzeugnisses handelt, bei dem die Vorteile der vorliegenden Erfindung besonders stark zum Tragen kommen.

Im Rahmen des beispielhaften Verfahrens wird ein textiler Festigkeitsträger bereitgestellt, bei dem es sich um ein Gewebe aus mehreren Verstärkungskorden handelt, wobei die Verstärkungskorde jeweils ein Aramidgarn mit einer Feinheit von 420 dtex und ein Nylongarn mit einer Feinheit von 470 dtex umfassen, die mit 320 T/m miteinander endverdreht sind. Das eingesetzte Aramidgarn ist dabei gelblich gefärbt, wohingegen das Nylongarn über eine herstellerspezifische Kennfandenmarkierung verfügt.

Der textile Festigkeitsträger wird durch ein Tauchverfahren mit einer wässrigen Dispersion haftaktiviert und mittels Heißverstreckung bearbeitet. Die wässrige Dispersion enthält weder freies Resorcin oder Resorcin-Vorkondensaten noch freies Formaldehyd oder Formaldehyd freisetzenden Substanzen. Als wässrige Dispersion wird dabei eine Zusammensetzung eingesetzt, die Vinyl-Pyridin-Latex in einem auf das Trockengewicht bezogenem Massenanteil von 20 %, geblocktes Hexamethylendiisocyanat in einem auf das Trockengewicht bezogenem Massenanteil von 5 % und Polyisoprenkautschuk-Latex in einem auf das Trockengewicht bezogenem Massenanteil von 10 % umfasst. Zudem umfasst die wässrige Dispersion bevorzugt auch eine auf Acrylsäure basierende Polycarbonsäure und als Epoxid-Verbindung Glycerolbasierten Polyglycidylether.

Anschließend wird der haftaktivierte textile Festigkeitsträger vollständig in eine vernetzbare Gummierungsmischung eingebettet. Die vernetzbare Gummierungsmischung umfasst dabei 25 phr eines bromierten Copolymers aus Isobutylen und para-Metyhlstyrol und 55 phr an natürlichem Polyisopren und 20 phr an cis-1,4-Butadienkautschuk. Die vernetzbare Gummierungsmischung umfasst zudem 30 phr an amorphem Siliciumdioxid als Füllstoff und ist frei von schwarzen Farbmitteln, insbesondere schwarzen Pigmenten wie Ruß oder Graphen. Als Teil eines üblichen Vulkanisationssystems umfasst die vernetzbare Gummierungsmischung zudem 2,4 phr Schwefel sowie darüber hinaus übliche weitere Bestandteile wie Silan-Kupplungsagenzien und Klebharze, wobei diese so ausgewählt werden, dass sie die Transparenz der vernetzten Gummierungsmischung nicht beeinträchtigen. Diese vernetzbare Gummierungsmischung resultiert nach der Vulkanisation in einer vernetzten Gummierungsmischung, die in ihrer Gesamtheit für sichtbares Licht mit Wellenlängen im Bereich von 380 bis 780 nm derart durchlässig ist, dass die in der transparenten vernetzten Gummierungsmischung eingebetteten Festigkeitsträger von außen mit bloßem Auge gut zu erkennen sind.

Das wie vorstehend beschrieben hergestellte vulkanisierbare Verbundmaterial wird als Teil der Reifenkarkasse mit anderen Komponenten zu einem unvulkanisierten Fahrradreifenrohling zusammengefügt, wobei das vulkanisierbare Verbundmaterial im Seitenbereich des Fahrradreifenrohlings freiliegt und nicht mit einer zusätzlichen Seitenwand überdeckt wird. Hierbei kann das vulkanisierbare Verbundmaterial einen Teil der Reifenkarkasse bilden oder alternativ auf eine Reifenkarkasse aufgelegt werden.

Aus dem unvulkanisierten Fahrradreifenrohling wird anschließend durch Vulkanisation bei üblichen Bedingungen ein Fahrradreifen erhalten, welcher im Bereich der Seitenwand das vulkanisierte Verbundmaterial umfasst, welches die äußerste Schicht des Fahrradreifens bildet, so dass die textilen Festigkeitsträger sichtbar sind, wobei diese vorteilhafterweise in ihrer ursprünglichen Färbung sichtbar bleiben und sich dadurch vor den dunklen unteren Lagen der Karkasse deutlich abzeichnen.

**Patentansprüche**

1.  Verfahren zur Herstellung eines vulkanisierbaren Verbundmaterials, umfassend die Schritte:

    a) Herstellen oder Bereitstellen eines textilen Festigkeitsträgers,
    b) Behandeln des textilen Festigkeitsträgers mit einer wässrigen Dispersion zur Haftaktivierung des textilen Festigkeitsträgers und zum Erhalt eines haftaktivierten textilen Festigkeitsträgers, und
    c) Einbringen des haftaktivierten textilen Festigkeitsträgers in eine vernetzbare Gummierungsmischung zum Erhalt des vulkanisierbaren Verbundmaterials,
    wobei die wässrige Dispersion im Wesentlichen frei ist von freiem Resorcin sowie Resorcin-Vorkondensaten, insbesondere Resorcin-Formaldehyd-Vorkondensaten, und frei ist von freiem Formaldehyd sowie Formaldehyd freisetzenden Substanzen,
    wobei die vernetzbare Gummierungsmischung durch Vulkanisation zu einer vernetzten Gummierungsmischung verarbeitet werden kann, die zumindest abschnittsweise für sichtbares Licht zumindest teilweise durchlässig ist.

2.  Verfahren nach Anspruch 1, wobei die wässrige Dispersion umfasst:

    (x1) wenigstens einen Kautschuklatex, bevorzugt in einem auf das Trockengewicht der wässrigen Dispersion bezogenem Massenanteil von 4 bis 60 %, und
    (x2) wenigstens ein geschütztes Isocyanat, bevorzugt in einem auf das Trockengewicht der wässrigen Dispersion bezogenem Massenanteil von 0,1 bis 10 %.

3.  Verfahren nach einem der Ansprüche 1 oder 2, wobei die wässrige Dispersion umfasst:

    (y1) wenigstens eine Verbindung, die eine Epoxy-Gruppe enthält, bevorzugt in einem auf das Trockengewicht der wässrigen Dispersion bezogenem Massenanteil von bis zu 6 %, und/oder
    (y2) wenigstens ein Polymer mit Carbonsäurefunktionellen Gruppen, bevorzugt in einem auf das Trockengewicht der wässrigen Dispersion bezogenem Massenanteil von bis zu 15 %.

4.  Verfahren nach einem der Ansprüche 1 bis 3, wobei die wässrige Dispersion eine der folgenden Komponenten umfasst:

    (z1) wenigstens einen Füllstoff, bevorzugt in einem auf das Trockengewicht der wässrigen Dispersion bezogenem Massenanteil von 0,02 bis 20 %, bevorzugt mit der Maßgabe, dass die wässrige Dispersion kein Polymer mit Carbonsäure-funktionellen Gruppen umfasst, oder
    (z2) wenigstens einen Polyisoprenkautschuk-Latex, bevorzugt in einem auf das Trockengewicht der wässrigen Dispersion bezogenem Massenanteil von 1 bis 20 %, bevorzugt mit der Maßgabe, dass die wässrige Dispersion wenigstens einen Kautschuklatex umfasst, welcher kein Polyisoprenkautschuk-Latex ist, oder
    (z3) wenigstens ein Wachs, bevorzugt in einem auf das Trockengewicht der wässrigen Dispersion bezogenem Massenanteil von 0,3 bis 30 %.

5.  Verfahren nach einem der Ansprüche 1 bis 4, zusätzlich umfassend den Schritt:
    d) Herstellen eines unvulkanisierten Rohlings, insbesondere eines unvulkanisierten Fahrzeugreifenrohlings, umfassend das vulkanisierbare Verbundmaterial.

6.  Verfahren zur Herstellung eines elastomeren Erzeugnisses, insbesondere eines Fahrzeugreifens, oder eines vulkanisierten Verbundmaterials, umfassend die Schritte des Verfahrens nach einem der Ansprüche 1 bis 5, sowie zusätzlich zumindest einen der Schritte:

    e) Vulkanisieren des vulkanisierbaren Verbundmaterials zum Erhalt eines vulkanisierten Verbundmaterials, und/oder
    f) Vulkanisieren des unvulkanisierten Rohlings zum Erhalt eines elastomeren Erzeugnisses.

7.  Vulkanisierbares Verbundmaterial für die Herstellung von elastomeren Erzeugnissen, insbesondere von Fahrzeugreifen, umfassend:

    i) zumindest einen textilen Festigkeitsträger, welcher zumindest abschnittweise, bevorzugt im Wesentlichen vollständig, mit einer wässrigen Dispersion haftaktiviert ist, und

ii) eine vernetzbare Gummierungsmischung, die den textilen Festigkeitsträger umgibt, wobei die wässrige Dispersion im Wesentlichen frei ist von freiem Resorcin sowie Resorcin-Vorkondensaten, insbesondere Resorcin-Formaldehyd-Vorkondensaten, und frei ist von freiem Formaldehyd sowie Formaldehyd freisetzenden Substanzen, wobei die vernetzbare Gummierungsmischung durch Vulkanisation zu einer vernetzten Gummierungsmischung verarbeitet werden kann, die zumindest abschnittweise für sichtbares Licht zumindest teilweise durchlässig ist.

8. Vulkanisiertes Verbundmaterial, hergestellt oder herstellbar durch Vulkanisation des vulkanisierbaren Verbundmaterials nach Anspruch 7, umfassend eine vernetzte Gummierungsmischung, die für sichtbares Licht zumindest teilweise durchlässig ist.

9. Elastomeres Erzeugnis, insbesondere Fahrzeugreifen, umfassend ein vulkanisiertes Verbundmaterial nach Anspruch 8.

10. Verwendung einer wässrigen Dispersion zur Haftaktivierung von textilen Festigkeitsträgern für Verbundmaterialien mit transparenten Gummierungsmischungen zur Verbesserung der visuellen Identifizierbarkeit der textilen Festigkeitsträger in der transparenten Gummierungsmischung und/oder zur Verringerung von optischen Defekten im Kontaktbereich zwischen den textilen Festigkeitsträgern und der transparenten Gummierungsmischung, wobei die wässrige Dispersion im Wesentlichen frei ist von freiem Resorcin sowie Resorcin-Vorkondensaten, insbesondere Resorcin-Formaldehyd-Vorkondensaten, und frei ist von freiem Formaldehyd sowie Formaldehyd freisetzenden Substanzen.

Europäisches
Patentamt

European
Patent Office

Office européen
des brevets

**EUROPÄISCHER RECHERCHENBERICHT**

Nummer der Anmeldung

EP 21 19 4745

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 702 524 A1 (CONTINENTAL REIFEN DEUTSCHLAND GMBH [DE] ET AL.) 2. September 2020 (2020-09-02) * Absätze [0002], [0004], [0006], [0008], [0010], [0022], [0033], [0048], [0049]; Beispiel 11 * ----- | 1-10 | INV. B32B5/024 B32B25/10 C08K3/36 C08L7/02 C08L19/02 C08L33/04 |
| X,D | EP 3 702 523 A1 (CONTINENTAL REIFEN DEUTSCHLAND GMBH [DE] ET AL.) 2. September 2020 (2020-09-02) * Absätze [0001], [0004], [0006], [0008], [0027] – [0029], [0038], [0054], [0055]; Anspruch 4 * ----- | 1-10 | C08L63/00 C08L91/00 D06M11/79 D06M15/263 D06M15/55 D06M15/5693 |
| A,D | DE 82 34 954 U1 (CONTINENTAL GUMMI-WERKE AG) 9. Juni 1983 (1983-06-09) * das ganze Dokument * ----- | 1-10 | |

**RECHERCHIERTE SACHGEBIETE (IPC)**

C08L
C08K
B60C
B32B
D06M

Der vorliegende Recherchenbericht wurde für alle Patentansprüche erstellt

| Recherchenort | Abschlußdatum der Recherche | Prüfer |
|---|---|---|
| **München** | **15. Februar 2022** | **Okunowski, Joachim** |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
....................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 19 4745

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-02-2022

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| EP 3702524 | A1 | | 02-09-2020 | CN | 113939623 | A | 14-01-2022 |
| | | | | EP | 3702524 | A1 | 02-09-2020 |
| | | | | EP | 3931389 | A1 | 05-01-2022 |
| | | | | KR | 20210131421 | A | 02-11-2021 |
| | | | | WO | 2020178186 | A1 | 10-09-2020 |
| EP 3702523 | A1 | | 02-09-2020 | CN | 113614306 | A | 05-11-2021 |
| | | | | EP | 3702523 | A1 | 02-09-2020 |
| | | | | EP | 3931390 | A1 | 05-01-2022 |
| | | | | KR | 20210134026 | A | 08-11-2021 |
| | | | | WO | 2020178187 | A1 | 10-09-2020 |
| DE 8234954 | U1 | | 09-06-1983 | DE | 8234954 | U1 | 09-06-1983 |
| | | | | EP | 0117904 | A2 | 12-09-1984 |
| | | | | JP | S59118509 | A | 09-07-1984 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 8234954 U1
- US 6624220 B1
- US 20040044118 A1
- DE 102008037714 A1
- WO 2019015792 A1
- EP 3702521 A1
- EP 3702522 A1
- EP 3702523 A1
- DE 69722388 T2